# EUROPÄISCHE PATENTANMELDUNG

(11) **EP 3 399 508 A2**
(43) Veröffentlichungstag der Anmeldung: **07.11.2018**
(21) Anmeldenummer: 18170483.4
(22) Anmeldetag: 03.05.2018
(51) Int. Cl.: G08B 5/36, B60R 25/10, G08B 25/08, G08B 25/10, G08B 25/00

(54) **SYSTEM ZUR ÜBERWACHUNG DES KRAFTSTOFFVORRATES ODER DER LADUNG AN IN RUHE BEFINDLICHEN LAND-, LUFT- ODER WASSERFAHRZEUGEN**

(30) Priorität: 04.05.2017 DE 202017102677 U; 30.05.2017 DE 202017103250 U
(71) Anmelder: OKM GmbH, 04600 Altenburg (DE)
(72) Erfinder: Krauß, Andreas, 04617 Fockendorf (DE)
(74) Vertreter: Kruspig, Volkmar

(57) **Zusammenfassung**

Die Erfindung betrifft ein System zur Überwachung des Kraftstoffvorrates oder der Ladung an in Ruhe befindlichen Land-, Luft- oder Wasserfahrzeugen, bestehend aus einer Sensoreinheit, welche den Füllstand in einem Kraftstoffbehältnis oder Manipulationen an diesem oder der Ladung prüft und bei Veränderungen des Füllstandes oder festgestellten Manipulationen nach Durchlaufen einer Signifikanzroutine eine Alarmmeldung veranlasst. Weiterhin weist das System eine Rechnereinheit zur Sensorsignalverarbeitung sowie zur Programmsteuerung auf, wobei die Rechnereinheit mit einer drahtlosen Kommunikationseinheit in Verbindung steht, um die Alarmmeldung weiterzugeben.

Erfindungsgemäß besitzt die drahtlose Kommunikationseinheit sowohl eine Sende- als auch eine Empfangseinrichtung, wobei die Empfangseinrichtung in der Lage ist, Alarmmeldungen von Fremden, in der Umgebung befindlichen Fahrzeugen zu empfangen und an die Rechnereinheit weiterzuleiten, so dass diese Alarmmeldung dazu führt, ein akustisches und/oder optisches Alarmsignal auszulösen, wobei die Sendeeinrichtung eine Eigenalarmmeldung an fremde, in der Umgebung befindliche Fahrzeuge weiterleitet mit der Folge eines Schwarmalarms aller in der Umgebung befindlichen Fahrzeuge.

## Beschreibung

Die Erfindung betrifft ein System zur Überwachung des Kraftstoffvorrates oder der Ladung an in Ruhe befindlichen Land-, Luft- oder Wasserfahrzeugen, bestehend aus einer Sensoreinheit, welche den Füllstand in einem Kraftstoffbehältnis oder Manipulationen an diesem oder der Ladung prüft und bei Veränderungen des Füllstandes oder festgestellter Manipulationen nach Durchlaufen einer Signifikanzroutine eine Alarmmeldung veranlasst, einer Rechnereinheit zur Sensorsignalverarbeitung sowie zur Programmsteuerung, wobei die Rechnereinheit mit einer drahtlosen Kommunikationseinheit in Verbindung steht, um die Alarmmeldung weiterzugeben gemäß Anspruch 1.

Mit steigenden Kraftstoffpreisen hat der Diebstahl von Kraftstoffen durch Abzapfen stark zugenommen. Dabei wird Kraftstoff sowohl aus den Tanks von Zugmaschinen als auch Behältnissen für Treibstoff von Kühlaggregaten abgezapft. Schäden durch Kraftstoffdiebstahl sind bei keinem Versicherer gedeckt. Die Versicherung greift nur bei Diebstahl eines kompletten Fahrzeuges oder bei fest eingebauter Teile. Beschädigungen am Tank oder am Tankdeckel sind nur bei der Vollkasko abgedeckt, wobei im Regelfall der Preis eines Tankdeckels unter der vereinbarten Selbstbeteiligung liegt.

Organisierte Täter agieren im Schutz der Dunkelheit und oft in Gruppen. Oft sind typische Tatorte Firmengelände und Industriegebiete. Kraftstoffdiebstähle finden auch auf Raststätten statt während der Zeiten, in denen der Fahrer des betreffenden Kraftfahrzeuges seine gesetzlichen Ruhepausen einhält. Die Fahrzeuge der Diebe sind in vielen Fällen mit gestohlenen Kennzeichen versehen, so dass übliche Videoaufnahmen eines Rastplatzes wenig weiterhelfen.

Zur Vermeidung von Kraftstoffdiebstählen werden unter anderem elektronische Überwachungssysteme eingesetzt. Derartige Systeme sind zwischen Tankgeber und Tankanzeige geschalten und kontrollieren den Füllstand nach Abschalten der Zündung. Als Alternative stellen sich Ultraschallsensoren dar. Fällt der Kraftstoffpegel, wird sofort ein Alarm ausgelöst. Die Alarmmeldung kann hier per Sirene oder still per SMS oder E-Mail erfolgen.

So zeigt beispielsweise die EP 2 615 001 A2 ein Verfahren zur Erfassung eines abnormalen Füllstandes am Tank eines Fahrzeuges, wobei bei Erfassung eines abnormalen Zustandes ein Alarm ausgelöst wird. Der Alarm kann hierbei akustisch und/oder optisch erfolgen.

Aus der EP 3 043 157 A2 ist eine Vorrichtung zur Überwachung eines Kraftstoffsystems eines Fahrzeuges vorbekannt. Die dortige Vorrichtung weist eine Messeinheit mit Sensormitteln zum Erfassen von Änderungen im Kraftstoffsystem auf.

Darüber hinaus sind Signalisierungsmittel vorhanden, um in Reaktion auf eine signifikante Änderung im Kraftstoffsystem eine Benachrichtigungsmeldung zu erzeugen, die einen Benutzer informiert darüber, dass die Integrität des Kraftstoffsystems modifiziert wurde. Außerdem zeigt diese Druckschrift, dass die Übertragungsfrequenz von Alarmsignalen im Bereich zwischen 50 Hz und 500 Hz liegt. Diesbezüglich ist ein Kommunikationssystem einsetzbar, welches die Informationen zum Alarm an ein oder mehrere Fahrzeuge weiterleiten kann, wenn die entsprechenden Fahrzeuge mit einem gleichartigen Kommunikationssystem ausgestattet sind. Die Kommunikation erfolgt über ein GSM-Protokoll.

Bei dem System zur Überwachung abormaler Änderungen der Kraftstoffmenge in einem Tank gemäß CN 204184316 U wird ein akustischer und/oder optischer Alarm ausgelöst, wenn sich der Füllstand im Tank ändert. Weiterhin wird per GSM-Signal eine Nachricht an den Fahrzeughalter weitergeleitet. Darüber hinaus offenbart die CN 204184316 U die Aufnahme von Positionsortungsinformationen zum Fahrzeug.

Die US 2016/0214570 A1 betrifft eine Vorrichtung, welche eine Kraftstoffüberwachung und eine Diebstahlsicherung vereinbart. Die Vorrichtung überträgt Echtzeitinformationen über die Kraftstoffmenge bzw. den Kraftstoffverbrauch an einen entfernten Empfänger.

Bei der Fahrzeugkraftstoffdiebstahlalarmanlage gemäß GB 2469336 A wird ein Verlust von Kraftstoff aus einem Kraftstoffbehältnis erfasst. Ein Alarm wird ausgelöst, wenn ein plötzlicher Kraftstoffpegelabfall detektiert wird. Der Alarm ist als hörbare oder sichtbare Warnung ausgebbar und kann auch eine GSM-Einheit aktivieren.

Aus der US 8 928 473 B2 ist eine Kraftstoffüberwachungsvorrichtung für ein Fahrzeug vorbekannt, welche einen oder mehrere Treibstofftanksensoren aufweist. Die Kraftstoffüberwachungsvorrichtung steht mit einem Steuermodul in Verbindung und weist eine Kommunikationseinrichtung auf. Diesbezüglich wird auf ein Mobilfunkkommunikationssystem zurückgegriffen. Hierdurch soll ein Kraftstoffdiebstahl, der an einem entfernten Standort stattfand, identifizierbar werden.

Den bekannten Lösungen ist gemeinsam, dass zwar erkennbar ist, ob und wenn ja wo ein Kraftstoffdiebstahl stattgefunden hat. Auch können Alarmmeldungen abgesetzt werden. Da jedoch üblicherweise die Täter sehr schnell reagieren und die Fluchtfahrzeuge mit den Behältnissen zum Auffangen des gestohlenen Kraftstoffes sich in unmittelbarer Nähe des Diebstahlautos befinden, ist es außerordentlich schwer, die Diebe auf frischer Tat zu ertappen. Aus diesem Grunde ist die Abschreckungswirkung bekannter Systeme eher gering.

Aus dem Vorgenannten ist es daher Aufgabe der Erfindung, ein weiterentwickeltes System zur Überwachung des Kraftstoffvorrates oder der Ladung an in Ruhe befindlichen Fahrzeugen anzugeben. Dabei kann es sich sowohl um Land-, Luft- oder Wasserfahrzeuge handeln, sofern Selbige über Tanks zur Bevorratung flüssigen Kraftstoffes verfügen. Mit dem neuartigen System soll ein hohes Abschreckungspotential geschaffen werden und die Möglichkeit bestehen, Täter auf frischer Tat zu stellen.

Die Lösung der Aufgabe der Erfindung erfolgt durch die Lehre der Merkmalskombination gemäß Anspruch 1, wobei die Unteransprüche mindestens zweckmäßige Ausgestaltungen und Weiterbildungen umfassen.

Das erfindungsgemäße System zur Überwachung des Kraftstoffvorrates oder der Ladung an in Ruhe befindlichen Land-, Luft- oder Wasserfahrzeugen besteht zunächst aus einer Sensoreinheit, welche den Füllstand in einem Kraftstoffbehältnis prüft. Die Sensoreinheit kann ergänzend oder alternativ auch Manipulationen am Kraftstoffbehältnis oder der Ladung erkennen. Nach Durchlaufen einer Signifikanzroutine wird dann eine Alarmmeldung veranlasst. Diesbezüglich steht eine Rechnereinheit zur Sensorsignalverarbeitung zur Verfügung. Die Rechnereinheit dient weiterhin zur Programmsteuerung, wobei die Rechnereinheit mit einer drahtlosen Kommunikationseinheit in Verbindung steht, um die Alarmmeldung weiterzugeben.

In erfindungsgemäßer Weise besitzt die drahtlose Kommunikationseinheit sowohl eine Sende- als auch eine Empfangseinrichtung.

Die Empfangseinrichtung ist in der Lage, Alarmmeldungen von fremden, in der Umgebung befindlichen Fahrzeugen zu empfangen und an die interne Recheneinheit weiterzuleiten, so dass mittels dieser Alarmmeldung ein akustisches und/oder optisches Alarmsignal auslösbar ist.

Die Sendeeinrichtung ist darüber hinaus in der Lage, eine Eigenalarmmeldung an fremde, in der Umgebung befindliche Fahrzeuge weiterzuleiten.

Die Folge ist hierbei, dass bei einem ausgelösten Alarm an einem oder mehreren Fahrzeugen ein Schwarmalarm aller in der Umgebung befindlicher Fahrzeuge bzw. Empfänger ausgelöst wird.

Wenn beispielsweise auf einem Speditionsgelände oder aber einem größeren Rastplatz mehrere Dutzend LKWs parken und an einem der Lastkraftwagen Manipulationen am Tank vorgenommen werden, es dann zu einer Alarmauslösung nebst Schwarmalarm kommt, wird ein akustisches und/oder optisches Inferno ausgelöst, dass alle Fahrer der betreffenden Fahrzeuge veranlasst, nach der Ursache zu forschen und gemeinsam das betreffende Gelände abzugehen, um die Diebe zu stellen.

Das System ist dabei so weitergebildet, dass beispielsweise das die Alarmmeldung ausgebende Fahrzeug einen Dauerhupton und die Schwarmfahrzeuge einen unterbrochenen Hupton als Signal ausgeben. Ebenso ist eine optische Differenzierung zwischen den Schwarmalarmgebern und dem Primäralarmgeber möglich.

In einer bevorzugten Weiterbildung der Erfindung verfügen mindestens die Sensoreinheit, die Rechnereinheit und die Sende- und Empfangseinrichtung über eine autarke, vom jeweiligen Bordnetz des Fahrzeuges unabhängige Stromversorgung.

Wenn bei einem derart ausgerüsteten Fahrzeug die Diebe zunächst die Stromversorgung manipulieren, indem beispielsweise Batteriekabel zerschnitten werden, bleibt trotzdem die Möglichkeit der Alarmmeldung an benachbarte Fahrzeuge mit Schwarmalarm erhalten.

Die Rechnereinheit des erfindungsgemäßen Systems ist so ausgeführt, dass bei Eingang einer Fremdalarmmeldung eine Relevanzprüfung der Meldung durchgeführt wird. Hierdurch wird vermieden, dass gerade im ISM-Band oft auftretende Störsignale zu einem Fehlalarm führen.

In einer Weiterbildung der Erfindung besteht die Möglichkeit, vor dem Auslösen eines akustischen und/oder optischen Alarmsignals einen stillen Alarm in den in der Umgebung befindlichen Fahrzeugen zu erzeugen. Dies kann ein zurückhaltender akustischer oder optischer Alarm sein, der lediglich dazu dient, den in der Fahrzeugkabine befindlichen Fahrer oder sonstige Personen auf eine bevorstehende oder akute Alarmsituation aufmerksam zu machen, so dass sich die betreffende Person auf einen demnächst folgenden quasi Hauptalarm einstellen kann.

Das akustische und/oder optische Alarmsignal kann ein Warnblinksignal, ein Lichthupensignal, ein Rundumlichtsignal, ein Kabinenbeleuchtungssignal, ein Hupsignal und/oder ein Sirenensignal umfassen.

In erfindungsgemäßer Weiterbildung ist eine tragbare, nicht ständig mit dem Fahrzeug verbundene Empfangseinrichtung vorgesehen, welche dem Nutzer eine Alarmmeldung signalisiert.

Wenn ein Nutzer beispielsweise eine Toilette auf einem Rastplatz aufsucht, ist er über ein mögliches Alarmgeschehen durch die tragbare Empfangseinrichtung informiert.

Die zum Einsatz kommende Sensoreinheit kann einen Ultraschallsensor, einen Lasersensor, einen Bewegungssensor, einen auf Druckänderungen ansprechenden Sensor, einen mechanischen Füllstandssensor, einen Tankradarsensor und/oder einen optoelektronischen Sensor, insbesondere eine Kamera aufweisen, wobei der jeweilige Sensor entweder unmittelbar oder mittelbar den Füllstand und/oder mechanische Manipulationen am Kraftstoffbehältnis oder anderen relevanten Teilen des Fahrzeuges oder der Ladung überwacht.

Die Sende- und Empfangseinrichtungen arbeiten bevorzugt im sogenannten ISM-Bandbereich, wobei eine automatische Umschaltung auf das jeweilige, regional zulässige Frequenzband vorgesehen ist.

Die Selektivität der Sende- und Empfangseinrichtungen der betreffenden Fahrzeuge ist zur Schwarmreichweitenbegrenzung einstellbar, jedoch in der Reichweite unter Beachtung der gesetzlichen Regelungen zur Nutzung derartiger Frequenzbänder begrenzt.

Zusätzlich besteht die Möglichkeit, eine Alarmweiterleitung über ein GSM- oder UMTS-Netz zu veranlassen, wobei diesbezüglich auf eine NFC- oder Bluetooth-Verbindung zu einem Mobilfunkgerät zum Zweck der Alarmweiterleitung zurückgegriffen werden kann.

Die Erfindung soll nachstehend anhand eines Ausführungsbeispieles sowie einer Figur näher erläutert werden.

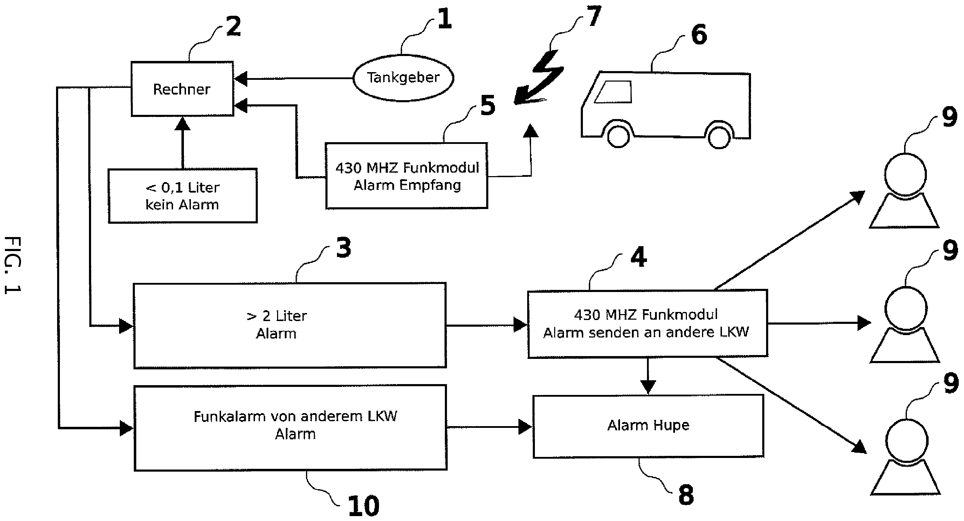

Die Figur zeigt hierbei ein quasi Blockschaltbild des erfindungsgemäßen Systems zur Überwachung des Kraftstoffvorrates an in Ruhe befindlichen Fahrzeugen, hier am Beispiel von Kraftfahrzeugen.

Das System weist zur Überwachung des Füllstandes eines Kraftstoffbehältnisses eine Sensoreinheit 1, zum Beispiel ausgebildet als Tankgeber auf.

Die Sensoreinheit 1 steht mit einer Rechnereinheit 2 zur Signalvorverarbeitung in Verbindung. Die Rechnereinheit 2 übernimmt weiterhin die Steuerung des gesamten Systems nebst einer Signifikanzroutine, um Fehlalarme auszuschließen.

Die Rechnereinheit 2 steht weiterhin mit einer Kommunikationseinheit 3 in Verbindung, um eine Alarmmeldung dann weiterzugeben, wenn beispielsweise ein Kraftstoffverlust oberhalb eines Schwellwertes, zum Beispiel von mehr als 2 Litern, festgestellt wurde.

Die drahtlose Kommunikationseinheit umfasst eine Sendeeinrichtung 4 sowie eine Empfangseinrichtung 5.

Die Empfangseinrichtung 5 ist dabei in der Lage, Alarmmeldungen 7 von fremden, in der Umgebung befindlichen Fahrzeugen 6 zu empfangen und an die Rechnereinheit 2 weiterzuleiten, so dass ein akustisches und/oder optisches Alarmsignal 8 auslösbar ist.

Die Sendeeinrichtung 4 ist in der Lage, eine Eigenalarmmeldung an fremde, in der Umgebung befindliche Fahrzeuge 9 bzw. entsprechende Personen weiterzuleiten, mit der Folge eines Schwarmalarms aller in der Umgebung befindlichen Fahrzeuge oder Personen 9.

Die Rechnereinheit 2 führt beim Eingang einer Fremdalarmmeldung 7 eine Relevanzprüfung 10 durch. Nach erfolgreichem Durchlaufen der Relevanzprüfung wird bei einem empfangenen Alarm, das von einem Fremdfahrzeug 6 übergeben wird, die im jeweiligen empfangenen Kraftfahrzeug befindliche Hupe oder Warnblinkanlage 8 betätigt.

Durch das Schwarmverhalten können bei Fahrzeugen, die sich in einem Umkreis von beispielsweise 150 Metern ausgehend vom Primäralarmfahrzeug befinden, die entsprechenden Fahrer alarmiert und zu Hilfe gerufen werden, so dass die Möglichkeit besteht, den Kraftstoffdieb auf frischer Tat zu stellen und/oder Umweltschäden durch auslaufenden Diesel einzugrenzen.

Das erfindungsgemäße System geht also davon aus, dass eine möglichst große Anzahl von Land-, Luft- oder Wasserfahrzeugen mit den systemrelevanten Einheiten und Einrichtungen versehen sind, so dass am Ort des Diebstahlgeschehens der gewünschte Schwarmalarm erzeugt werden kann.

In Weiterbildung der Erfindung kann das System eine Signalisierungseinheit umfassen, die dem jeweiligen Fahrer anzeigt, dass auf dem derzeitigen Stellplatz eine Vielzahl weiterer Fahrzeuge vorhanden sind, die ebenfalls die systemrelevante Ausrüstung besitzen. Denkbar ist hier auch, dass sich der jeweilige Fahrer mit den systemrelevanten Einrichtungen sich quasi über ein Funksignal anmeldet und damit erkenntlich wird, dass das betreffende Fahrzeug bzw. der Fahrer bereit ist, im Alarmschwarm mitzuwirken.

Diese Möglichkeit des Erkennens von Fahrzeugen mit gleichem Alarmsystem erhöht das Sicherheitsgefühl der Fahrer.

In einer Ausgestaltung der Erfindung besteht die Möglichkeit, dass die Empfangseinrichtung in der Lage ist, Text-, Bild- und/oder Videonachrichten zu empfangen, zu verarbeiten sowie darzustellen oder wiederzugeben.

Nähert sich ein mit der Empfangseinrichtung und der erfindungsgemäßen Vorrichtung ausgerüstetes Fahrzeug beispielsweise einer Raststätte bzw. einem Parkplatz, kann mit Hilfe der Empfangseinrichtung eine Information weitergeleitet werden, dass freie Stellplätze zur Verfügung stehen, wo sich diese Stellplätze befinden und ob und inwieweit bereits weitere Fahrzeuge auf dem Gelände parken, die mit der erfindungsgemäßen Vorrichtung bzw. dem System ausgerüstet sind.

Darüber hinaus besteht die Möglichkeit, dass der Betreiber einer Raststätte oder einer Tankstelle ankommende oder bereits parkende Fahrzeuge über bestimmte Angebote oder Dienstleistungen gezielt informiert. Hierbei kann es sich zum Beispiel um Warenangebote oder das Angebot der Nutzung einer Dusche in den Räumen der Raststätte bzw. der Tankstelle handeln.

## Patentansprüche

1. System zur Überwachung des Kraftstoffvorrates oder der Ladung an in Ruhe befindlichen Land-, Luft- oder Wasserfahrzeugen, bestehend aus einer Sensoreinheit (1), welche den Füllstand in einem Kraftstoffbehältnis oder Manipulationen an diesem oder der Ladung prüft und bei Veränderungen des Füllstandes oder festgestellter Manipulation nach Durchlaufen einer Signifikanzroutine eine Alarmmeldung veranlasst, einer Rechnereinheit (2) zur Sensorsignalverarbeitung sowie zur Programmsteuerung, wobei die Rechnereinheit (2) mit einer drahtlosen Kommunikationseinheit (3) in Verbindung steht, um die Alarmmeldung weiterzugeben,
**dadurch gekennzeichnet, dass**
die drahtlose Kommunikationseinheit eine Sende- (4) und eine Empfangseinrichtung (5) aufweist, wobei die Empfangseinrichtung (5) in der Lage ist, Alarmmeldungen (7) von fremden, in der Umgebung befindlichen Fahrzeugen (6) zu empfangen und an die Rechnereinheit (2) weiterzuleiten, so dass infolge dieser Alarmmeldung ein akustisches und/oder optisches Alarmsignal (8) auslösbar ist, wobei die Sendeeinrichtung eine Eigenalarmmeldung an fremde, in der Umgebung befindliche Fahrzeuge (9) weiterleitet, mit der Folge eines Schwarmalarms aller in der Umgebung befindlichen Fahrzeuge (9).

2. System nach Anspruch 1,
**dadurch gekennzeichnet, dass**
mindestens die Sensoreinheit (1), die Rechnereinheit (2) und die Sende- und Empfangseinrichtung (4; 5) über eine autarke, vom jeweiligen Bordnetz unabhängige Stromversorgung verfügt.

3. System nach Anspruch 1 oder 2,
**dadurch gekennzeichnet, dass**
die Rechnereinheit (2) beim Eingang einer Fremdalarmmeldung eine Relevanzprüfung (10) der Meldung durchführt.

4. System nach einem der vorangegangenen Ansprüche,
**dadurch gekennzeichnet, dass**
vor dem Auslösen eines akustischen und/oder optischen Alarmsignals ein stiller Alarm in den in der Umgebung befindlichen Fahrzeugen erzeugt wird.

5. System nach einem der vorangegangenen Ansprüche,
**dadurch gekennzeichnet, dass**
das akustische und/oder optische Alarmsignal ein Warnblinksignal, ein Lichthupensignal, ein Rundumlichtsignal, ein Kabinenbeleuchtungssignal, ein Hupsignal und/oder ein Sirenensignal umfasst.

6. System nach einem der vorangegangenen Ansprüche,
**dadurch gekennzeichnet, dass**
eine tragbare, nicht ständig mit dem Fahrzeug verbundene Empfangseinrichtung vorgesehen ist, welche dem Nutzer eine Alarmmeldung signalisiert.

7. System nach einem der vorangegangenen Ansprüche,
**dadurch gekennzeichnet, dass**
die Sensoreinheit (1) einen Ultraschallsensor, einen Lasersensor, einen Bewegungssensor, einen auf Druckänderungen ansprechenden Sensor, einen mechanischen Füllstandssensor, einen Tankradarsensor und/oder einen optoelektronischen Sensor aufweist, wobei der jeweilige Sensor entweder unmittelbar oder mittelbar den Füllstand und/oder mechanische Manipulationen überwacht.

8. System nach einem der vorangegangenen Ansprüche,
**dadurch gekennzeichnet, dass**
die jeweiligen Sende- und Empfangseinrichtungen (4; 5) im ISM-Bandbereich arbeiten, wobei eine automatische Umschaltung auf das jeweilige, regional zulässige Frequenzband vorgesehen ist.

9. System nach einem der vorangegangenen Ansprüche,
**dadurch gekennzeichnet, dass**
die Selektivität der Sende- und Empfangseinrichtungen (4; 5) zur Schwarmreichweitenbegrenzung einstellbar ist.

10. System nach einem der vorangegangenen Ansprüche,
**dadurch gekennzeichnet, dass**
zusätzlich eine Alarmweiterleitung über ein GSM- oder UMTS-Mobilfunknetz erfolgt.

11. System nach einem der vorangegangenen Ansprüche,
**dadurch gekennzeichnet, dass**
die Empfangseinrichtung (5) in der Lage ist, Text-, Bild- und/oder Videonachrichten zu verarbeiten und darzustellen oder wiederzugeben.
